# EUROPÄISCHE PATENTANMELDUNG

(11) **EP 4 813 713 A1**
(43) Veröffentlichungstag der Anmeldung: **30.09.2026**
(21) Anmeldenummer: 26166080.7
(22) Anmeldetag: 19.03.2026
(51) Int. Cl.: B60K 25/00

(54) **VERFAHREN, GETRIEBESTEUERGERÄT, GETRIEBESYSTEM, STEUERSYSTEM UND KRAFTFAHRZEUG**

(30) Priorität: 24.03.2025 DE 102025111196
(71) Anmelder: ZF Friedrichshafen AG, 88046 Friedrichshafen (DE)
(72) Erfinder: Madlener, Matthias, 88367 Hohentengen (DE); Rothmund, Andreas, 88367 Hohentengen (DE); Glöckner, Rico, 94060 Pocking (DE)
(74) Vertreter: ZF Friedrichshafen AG

(57) **Zusammenfassung**

Die Erfindung betrifft ein Verfahren zum Steuern (60) eines elektrischen angetriebenen Zapfantriebs (18) eines Antriebsstrangs eines Kraftfahrzeugs (10). Das Verfahren weist einen Schritt eines Empfangens (56) einer durch ein Fahrzeugsteuergerät (30) bestimmten Sollantriebssteuerung und einer durch das Fahrzeugsteuergerät (30) bestimmten Steuerklasse an einem Getriebesteuergerät (32) auf. Zudem weist das Verfahren ein Bestimmen (58) einer Steuerung des Zapfantriebs (18) in Abhängigkeit von der Sollantriebssteuerung und von der Steuerklasse durch ein Getriebesteuergerät (32) auf. Zudem bezieht sich die Erfindung auf ein Getriebesteuergerät (32), ein Getriebesystem, ein Steuersystem und ein Kraftfahrzeug (10).

## Beschreibung

Die vorliegende Erfindung bezieht sich auf ein Verfahren zum Steuern eines angetriebenen Zapfantriebs eines Antriebsstrangs eines Kraftfahrzeugs. Zudem bezieht sich die Erfindung auf ein Getriebesteuergerät, ein Getriebesystem, ein Steuersystem und ein Kraftfahrzeug.

### Stand der Technik

Getriebesteuergeräte steuern üblicherweise eine Schaltung eines Kraftfahrzeugs. Beispielsweise erfolgt durch das Getriebesteuergerät eine Kupplungsansteuerung. Zudem kann eine Schaltstrategie vorgegeben werden. Bei elektrisch angetriebenen Zapfantrieben eines Antriebsstrangs kann das Getriebesteuergerät zusätzlich eine Steuerung des Zapfantriebs vorgeben, beispielsweise durch Ansteuerung eines Inverters. Dafür wird beispielsweise eine Steuerung des Fahrzeugs, wie eine Betätigung von einem Joystick, verarbeitet. Das Getriebesteuergerät ist für viele Fahrzeughersteller dabei ein Zukaufteil.

### Darstellung der Erfindung

Ein erster Aspekt betrifft ein Verfahren zum Steuern eines angetriebenen Zapfantrieb eines Antriebsstrangs eines Kraftfahrzeugs. Der Zapfantrieb kann ein elektrisch angetriebener Zapfantrieb sein. Das Verfahren kann beispielsweise mittels eines nachstehend beschriebenen Getriebesteuergeräts oder Steuersystems ausgeführt werden. Der Antriebsstrang kann als elektrischer Antriebsstrang ausgebildet sein. Durch das Verfahren kann auch eine Regelung des Zapfantriebs erfolgen. Ein Kraftfahrzeug kann beispielsweise als Arbeitsmaschine ausgebildet sein. Eine Arbeitsmaschine kann beispielsweise als Landmaschine, wie ein Traktor, oder als Baumaschine, wie ein Radlader, ausgebildet sein. Der Antriebsstrang kann eine jeweilige Leistung beispielsweise elektrisch bereitstellen. Der Antriebsstrang kann einen Antriebsmotor aufweisen. Der Antriebsmotor kann als Elektromotor ausgebildet sein, wobei der Antriebsstrang dann einen Inverter und auch eine Energiequelle, wie eine Batterie, aufweisen kann. Der Antriebsmotor kann auch als Verbrennungskraftmaschine ausgebildet sein.

Der Antriebsstrang kann ein Getriebe aufweisen. Das Getriebe kann als Schaltgetriebe ausgebildet sein und beispielsweise eine oder mehrere Kupplungen aufweisen. Der Antriebsstrang kann beispielsweise dazu ausgebildet sein, eine Abtriebswelle, eine Zapfwelle und alternativ oder zusätzlich eine Pumpe anzutreiben. Neben dem Antriebsmotor kann der Antriebsstrang auch einen Zapfmotor aufweisen, mit welchem der Zapfantrieb elektrisch angetrieben wird. Der Zapfmotor kann als Elektromotor ausgebildet sein. Der Antriebsmotor und der Zapfmotor können gemeinsam durch einen Elektromotor gebildet sein. Der Elektromotor des Zapfantriebs kann aber auch zu einem Fahrantrieb separat sein. Der Fahrantrieb und der Zapfantrieb können gekoppelt oder koppelbar sein, beispielsweise zur wechselseitigen Unterstützung oder um eine mechanische Wegzapfwellenfunktion bereitzustellen. Der Zapfantrieb kann den Elektromotor mit einem Inverter und ein Getriebe aufweisen. Das Getriebe des Zapfantriebs kann ein Schaltgetriebe sein oder nur eine feste Übersetzung bereitstellen. Der Zapfantrieb kann eine Zapfwelle aufweisen. Die Zapfwelle kann beispielsweise vorderseitig oder hinterseitig von dem Kraftfahrzeug vorstehen. Mittels des Zapfantriebs können Anbaugeräte des Fahrzeugs antreibbar sein.

Ein Antriebsstrang kann eine Fahrleistung bereitstellen. Bei Arbeitsmaschinen kann der Antriebsstrang alternativ oder zusätzlich eine Arbeitsleistung bereitstellen, beispielsweise an einer Zapfwelle. Durch den Antriebsstrang, beispielsweise dessen Zapfantrieb, kann eine Pumpe antreibbar sein, beispielsweise um eine hydraulische Leistung bereitzustellen. Mit dem bereitgestellten hydraulischen Druck können beispielsweise jeweilige Kupplungen und alternativ oder zusätzlich eine Lenkhydraulik betätigt werden. Bei vielen Kraftfahrzeugen ist es erforderlich, dass weitere Randbedingungen, wie ein Mindestdruck für die Kupplungsbetätigung, neben reinen Leistungsanforderungen an den Zapfantrieb berücksichtigt werden. Aus diesem Grund ist es oft nicht wünschenswert, dass der Zapfantrieb allein oder direkt durch ein Fahrzeugsteuergerät gesteuert wird, selbst wenn ein Fahrzeughersteller die Steuerstrategie möglichst frei vorgeben will.

Das Verfahren weist einen Schritt eines Empfangens einer durch ein Fahrzeugsteuergerät bestimmten Sollantriebssteuerung an einem Getriebesteuergerät auf. Die Sollantriebssteuerung kann Sollwerte für ein Betreiben des Zapfantriebs oder auch insgesamt des Antriebsstrangs inklusive eines Fahrantriebs vorgeben. Zudem weist das Verfahren einen Schritt eines Empfangens einer durch das Fahrzeugsteuergerät bestimmten Steuerklasse an dem Getriebesteuergerät auf. Dafür kann das Steuersystem ein Fahrzeugsteuergerät und ein Getriebesteuergerät aufweisen.

Das Fahrzeugsteuergerät kann dazu ausgebildet sein, in Abhängigkeit von einer erfassten Fahrzeugsteuerung eine Sollantriebssteuerung zu bestimmen. Die Sollantriebssteuerung kann dem Getriebesteuergerät extern vorgegeben werden. Die Fahrzeugsteuerung kann beispielsweise manuell durch eine Betätigung von Steuerelementen oder auch durch eine autonome oder teilautonome Steuerung vorgegeben sein. Beispielsweise kann die Fahrzeugsteuerung durch jeweilige Steuerelemente, wie ein Fahrpedal, Bremspedal, Fahrbereichsschalter und alternativ oder zusätzlich einen Joystick vorgegeben werden. Dadurch kann ein Bediener beispielsweise eine Fahrgeschwindigkeit, eine Lenkrichtung und alternativ oder zusätzlich einen Betrieb von jeweiligen Werkzeugen steuern. Dazu korrespondierend können entsprechende Bediensignale erzeugt werden, welche von dem Fahrzeugsteuergerät verarbeitet werden. Dadurch kann an dem Fahrzeugsteuergerät grundsätzlich vorgegeben werden, wie der Zapfantrieb oder auch der Antriebsstrang auf Steuerbefehle und Eingaben reagieren soll.

Das Fahrzeugsteuergerät kann dazu ausgebildet sein, die Steuerklasse zu bestimmen. Die Steuerklasse kann beispielsweise ebenfalls in Abhängigkeit von der erfassten Fahrzeugsteuerung bestimmt werden. Es können aber alternativ oder zusätzlich auch andere Kenngrößen berücksichtigt werden, beispielsweise Sensordaten. Beispielsweise kann die Steuerklasse in Abhängigkeit von einem Betriebsort und alternativ oder zusätzlich einer Betriebsart des Kraftfahrzeugs bestimmt werden. Beispielsweise können bei der gleichen Fahrzeugsteuerung eine andere Steuerklasse bestimmt werden, wenn sich das Kraftfahrzeug auf einer Straße befindet oder wenn sich das Kraftfahrzeug abseits von Straßen befindet, wie auf einem Feld. Die Steuerklasse kann auch durch eine Eingabe an einem Bedienelement, wie an einem Touchscreen, vorgegeben werden, wobei das Fahrzeugsteuergerät die Steuerklasse dann in Abhängigkeit von dieser Benutzereingabe bestimmt. Die Steuerklasse kann auch in Abhängigkeit von einem Betriebsmodus des Kraftfahrzeugs durch das Fahrzeugsteuergerät bestimmt werden. Die Steuerklasse kann auch in Abhängigkeit von einem gewählten Fahrbereich des Kraftfahrzeugs bestimmt werden.

So kann ein Verhalten des Zapfantriebs in Reaktion auf Bediensignale durch den Fahrzeughersteller einfach modifiziert werden. Durch die Steuerklasse kann der Fahrzeughersteller eine Reaktion des Zapfantriebs auf die gleichen Bediensignale oder Sollantriebssteuerung modifizieren, beispielsweise um die Steuerung des Zapfantriebs auf unterschiedliche Benutzungssituationen abstimmen zu können. Das Fahrzeugsteuergerät kann beispielsweise einen Mikroprozessor aufweisen und mit jeweiligen Steuerelementen durch einen CAN-Bus verbunden sein.

Die Sollantriebssteuerung kann eine oder mehrere Vorgaben aufweisen, beispielsweise in Form von Kennwerten. Die Sollantriebssteuerung kann beispielsweise eine gewünschte Abtriebsdrehzahl oder ein gewünschtes Abtriebsdrehmoment aufweisen. Alternativ oder zusätzlich kann die Sollantriebssteuerung eine Veränderung dieser Werte aufweisen. Damit kann eine Leistungsabgabe des Antriebsstrangs und auch des Zapfantriebs und alternativ oder zusätzlich ein Fahrverhalten in Reaktion auf die Fahrzeugsteuerung in dem Fahrzeugsteuergerät vorgegeben werden. Beispielsweise kann die Sollantriebssteuerung ein Prozentsatz einer gewünschten Leistung des Antriebsstrangs und alternativ oder zusätzlich des Zapfantriebs von einer Nominalleistung sein. Die Steuerklasse kann beispielsweise eine Kenngröße sein, wie ein ganzzahliger Wert zwischen 0 und 15.

Das Fahrzeugsteuergerät kann dazu ausgebildet sein, die bestimmte Sollantriebssteuerung und die bestimmte Steuerklasse an das Getriebesteuergerät zu übermitteln. Die Übermittlung kann beispielsweise durch den CAN-Bus oder per Funk erfolgen. Das Getriebesteuergerät kann dazu ausgebildet sein, die von dem Fahrzeugsteuergerät bestimmte Sollantriebssteuerung und die von dem Fahrzeugsteuergerät bestimmte Steuerklasse zu empfangen. Dafür kann das Getriebesteuergerät beispielsweise mit dem CAN-Bus verbunden sein. Das Fahrzeugsteuergerät steuert so beispielsweise nicht direkt den Antriebsstrang.

Das Verfahren weist einen Schritt eines Bestimmens einer Steuerung des Zapfantriebs in Abhängigkeit von der empfangenen Sollantriebssteuerung und in Abhängigkeit von der empfangenen Steuerklasse durch ein Getriebesteuergerät auf. Insgesamt kann auch die Steuerung des Antriebsstrangs so durch das Getriebesteuergerät bestimmt werden. Die so bestimmte Steuerung kann beispielsweise Steuerdaten und alternativ oder zusätzlich Steuersignale aufweisen. Das Getriebesteuergerät kann dazu ausgebildet sein, in Abhängigkeit von der Sollantriebssteuerung und der Steuerklasse eine Steuerung des Zapfantriebs zu bestimmen. Beispielsweise kann die Steuerung die tatsächliche Steuerung des Zapfantriebs, wie des Elektromotors des Zapfantriebs und alternativ oder zusätzlich des Getriebes des Zapfantriebs sein. Mittels der bestimmten Steuerung des Zapfantriebs kann ein Schritt eines Steuerns des Zapfantriebs erfolgen, beispielsweise durch ein Übermitteln der Steuerung an eine Motorsteuerung, wie einen Inverter, und alternativ oder zusätzlich an das Getriebe.

Mit der von dem Getriebesteuergerät bestimmten Steuerung kann die gewünschte Sollantriebssteuerung umgesetzt werden, ohne dass bei dem Fahrzeugsteuergerät ein Systemverhalten des Zapfantriebs oder insgesamt des Antriebsstrangs bekannt ist. Die Steuerklasse kann die Umsetzung modifizieren. Beispielsweise kann durch die Steuerklasse eine Steuerkennlinie verändert werden, wie ein Drehzahlgradient. Durch die Steuerklasse kann ein Einfluss auf eine Abstimmung von Fahrzeugfunktionen genommen werden. Die Steuerklasse kann zu einer Stärke einer Hydraulikdruckversorgung korrespondieren. Beispielsweise kann in Abhängigkeit von der Steuerklasse ein Schwenkwinkel einer Pumpe des Zapfantriebs anders eingestellt werden oder bei einem bestimmten Schwenkwinkel eine andere Drehzahl eingestellt werden. So kann ein Verhalten des Zapfantriebs durch den Fahrzeughersteller vorgegebenen werden, ohne dass dieser direkt in eine Invertersteuerung, eine Pumpensteuerung oder Kupplungssteuerung eingreifen muss.

Durch die von dem Getriebesteuergerät bestimmte Steuerung kann der Zapfantrieb der Sollantriebssteuerung folgen und dabei können weitere Randbedingungen getriebesteuergerätseitig berücksichtigt werden. Somit kann beispielsweise ein Komponentenschutz in dem Getriebesteuergerät sichergestellt werden, ohne dass die dafür notwendigen Eigenschaften bei der Bestimmung der Sollantriebssteuerung in dem Fahrzeugsteuergerät bekannt sein müssen. Eine generelle Betriebsstrategie des Zapfantriebs oder auch des Antriebsstrangs kann durch das Fahrzeugsteuergerät vorgegeben werden. Die Umsetzung der Betriebsstrategie kann dann durch das Getriebesteuergerät erfolgen. Dabei kann je nach weiteren Randbedingungen die Steuerung des Zapfantriebs von der Sollantriebssteuerung abweichen. Die Abweichung kann dabei größer als eine Steuer- oder Regelabweichung sein, weil das Getriebesteuergerät weitere Kenngrößen und alternativ oder zusätzlich Limits bei der Steuerung berücksichtigen kann.

Das Getriebesteuergerät kann den Antriebsstrang mit der in Abhängigkeit von der Sollantriebssteuerung und in Abhängigkeit von der Steuerklasse bestimmten Steuerung tatsächlich steuern. Dazu kann dann ein entsprechendes Steuersignal von dem Getriebesteuergerät ausgegeben werden. Das Getriebesteuergerät kann beispielsweise den Inverter und damit den Elektromotor des Zapfantriebs steuern. Der Elektromotor wird beispielsweise von dem Getriebesteuergerät durch eine Drehzahlsteuerung gesteuert, optional unter Berücksichtigung eines Drehmomentlimits. Alternativ erfolgt beispielsweise eine Drehmomentsteuerung des Elektromotors durch das Getriebesteuergerät, optional mit einer Drehzahlregelung. Ein Regelziel des Getriebesteuergeräts kann beispielsweise nur ein Gradient der Abtriebsdrehzahl der Zapfwelle sein. Das Regelziel kann dabei in Abhängigkeit von einigen oder allen Kenngrößen der Sollantriebssteuerung bestimmt werden. Das Getriebesteuergerät kann beispielsweise alternativ oder zusätzlich einen Schwenkwinkel der Pumpe des Zapfantriebs steuern. Das Getriebesteuergerät kann beispielsweise alternativ oder zusätzlich ein Getriebe des Zapfantriebs steuern. Das Getriebesteuergerät kann beispielsweise alternativ oder zusätzlich weitere Komponenten des Antriebsstrangs steuern, wie ein Fahrgetriebe und einen Antriebsmotor für den Fahrantrieb. Das Getriebesteuergerät kann beispielsweise einen Mikroprozessor aufweisen und alternativ oder zusätzlich eine Schnittstelle für einen CAN-Bus aufweisen.

In einer Ausführungsform des Verfahrens kann es vorgesehen sein, dass ein Schritt eines Erfassens einer Fahrzeugsteuerung vorgesehen ist. Das Erfassen kann mittels Bedienelementen und alternativ oder zusätzlich dem Fahrzeugsteuergerät erfolgen. Die Fahrzeugsteuerung kann Bediensignale aufweisen. Das Verfahren kann zudem einen Schritt eines Bestimmens der Sollantriebssteuerung in Abhängigkeit von der erfassten Fahrzeugsteuerung durch das Fahrzeugsteuergerät aufweisen. Die bestimmte Sollantriebssteuerung kann an das Getriebesteuergerät übermittelt werden.

In einer Ausführungsform des Verfahrens kann es vorgesehen sein, dass ein Schritt eines Bestimmens der Steuerklasse durch das Fahrzeugsteuergerät vorgesehen ist. Beispielsweise kann die Bestimmung der Steuerklasse durch das Fahrzeugsteuergerät in Abhängigkeit von der erfassten Fahrzeugsteuerung erfolgen. Alternativ oder zusätzlich können andere Kennwerte berücksichtig werden, wie ein derzeitiger Standort, ein derzeitiger Fahrbereich oder ein derzeitiger Betriebsmodus. Die bestimmte Steuerklasse kann an das Getriebesteuergerät übermittelt werden.

In einer Ausführungsform des Verfahrens kann es vorgesehen sein, dass die Steuerklasse bei der Bestimmung der Steuerung des Zapfantriebs in Abhängigkeit von der Sollantriebssteuerung wenigstens ein Verhalten bei einer steigenden Anforderung an den Antriebsstrang als Steuerverhalten verändert. Die steigende Anforderung kann beispielsweise eine steigende angeforderte Fahrleistung und alternativ oder zusätzlich eine steigende angeforderte Zapfleistung sein. Alternativ oder zusätzlich kann es vorgesehen sein, dass die Steuerklasse bei der Bestimmung der Steuerung des Zapfantriebs in Abhängigkeit von der Sollantriebssteuerung wenigstens ein Verhalten bei einer fallenden Anforderung an den Antriebsstrang als Steuerverhalten verändert.

Alternativ oder zusätzlich kann es vorgesehen sein, dass die Steuerklasse bei der Bestimmung der Steuerung des Zapfantriebs in Abhängigkeit von der Sollantriebssteuerung wenigstens eine in Abhängigkeit von der Sollantriebssteuerung bestimmte Abtriebsdrehzahl als Steuerverhalten verändert. Beispielsweise können je nach Steuerklasse bei gleicher Sollantriebssteuerung eine unterschiedliche Abtriebsdrehzahl für die Zapfwelle eingestellt werden.

Alternativ oder zusätzlich kann es vorgesehen sein, dass die Steuerklasse bei der Bestimmung der Steuerung des Zapfantriebs in Abhängigkeit von der Sollantriebssteuerung wenigstens eine Verschiebung einer Priorität einer Leistungsaufteilung zwischen dem beispielsweise elektrisch angetriebenen Zapfantrieb und einem Fahrantrieb des Antriebsstrangs als Steuerverhalten verursacht. Beispielsweise kann je nach Steuerklasse mehr oder weniger Leistung dem Zapfantrieb zur Verfügung gestellt werden, sofern die angeforderte Fahrleistung und die angeforderte Zapfleistung eine maximale Leistung des Antriebsstrangs übersteigt.

In einer Ausführungsform des Verfahrens kann es vorgesehen sein, dass die erfasste Fahrzeugsteuerung eine erste Steuergröße und eine zweite Steuergröße aufweist. In Abhängigkeit von der ersten Steuergröße wird ein erster Sollantriebssteuerungswert und in Abhängigkeit von der zweiten Steuergröße wird ein zweiter Sollantriebssteuerungswert bestimmt. Das Fahrzeugsteuergerät kann dazu ausgebildet sein, in Abhängigkeit von der ersten Steuergröße einen ersten Sollantriebssteuerungswert und in Abhängigkeit von der zweiten Steuergröße einen zweiten Sollantriebssteuerungswert zu bestimmen. Es können auch mehrere Steuergrößen für die Bestimmung einer der Sollantriebssteuerungswerte berücksichtigt werden. Beispielsweise kann für den ersten Sollantriebssteuerungswert eine Stellung eines Joysticks, eine Position eines Auslegers, eine Position eines Werkzeugs, ein Arbeitszyklus, eine Betätigung eines Bremspedals und eine Betätigung einer Lenkung berücksichtigt werden. Beispielsweise kann für den zweiten Sollantriebssteuerungswert ein Sollschwenkwinkel oder Istschwenkwinkel der Pumpe berücksichtigt werden.

Für das Steuern des elektrisch angetriebenen Zapfantriebs kann ein Größerer der beiden Sollantriebssteuerungswerte genutzt werden. Beispielsweise wird mit zwei unterschiedlichen Modulen berechnet, welche Zapfleistung, Zapfdrehzahl oder welches Zapfdrehmoment erforderlich ist. Für die tatsächliche Steuerung wird dann der größere Wert genutzt. Größer kann hier in Bezug auf die erforderliche Leistung oder die maßgebliche Steuergröße des Elektromotors des Zapfantriebs definiert sein. Der Größere der beiden Werte wird beispielsweise mittels des Fahrzeugsteuergeräts oder des Getriebesteuergeräts anhand eines Vergleichs bestimmt. Es können auch mehr als zwei Sollantriebssteuerungswerte bestimmt und hiervon der Größte ausgewählt werden. Beispielsweise wird die Sollantriebssteuerung durch das Fahrzeugsteuergerät in Abhängigkeit von dem Größeren der beiden Sollantriebssteuerungswerte bestimmt. Alternativ können auch beide Sollantriebssteuerungswerte einen Teil der Sollantriebssteuerung bilden und von dem Getriebesteuergerät empfangen werden. Die Steuerung durch das Getriebesteuergerät kann dann in Abhängigkeit von dem Größeren der beiden Sollantriebssteuerungswerte bestimmt werden.

In einer Ausführungsform des Verfahrens kann es vorgesehen sein, dass bei der Bestimmung der Steuerung des Zapfantriebs eine Mindestanforderung berücksichtigt wird, beispielsweise durch das Getriebesteuergerät. Das Getriebesteuergerät kann dazu ausgebildet sein, bei der Bestimmung der Steuerung des Zapfantriebs eine Mindestanforderung zu berücksichtigen. So können Randbedingungen, wie eine Mindestversorgung eines Hydrauliksystems, berücksichtigt werden, ohne dass dies in dem Fahrzeugsteuergerät hinterlegt sein muss. Dadurch kann auch ein Einhalten von Limits des Zapfantriebs oder auch des Antriebsstrangs insgesamt berücksichtigt werden. Das Getriebesteuergerät kann so die Sollantriebssteuerung überstimmen. Die Limits können betriebsbedingt oder bauteilbedingt sein. Beispielsweise kann der Antriebsstrang nicht mit der Solldrehzahl oder dem Solldrehmoment aufgrund einer Herabsetzung von Betriebswerten und alternativ oder zusätzlich einer Überhitzung gesteuert werden. Stattdessen wird dann ein niedrigerer Wert zur Steuerung des Zapfantriebs genutzt. Beispielsweise kann der Antriebsstrang nicht mit der Solldrehzahl oder dem Solldrehmoment aufgrund einer Mindestdrehzahl zur Versorgung, wie beispielsweise einer Mindestdrehzahl zum ausreichenden Antreiben einer Pumpe zum Bedrucken der Lenkhydraulik und alternativ oder zusätzlich jeweiligen Kupplungen, betrieben werden. Stattdessen wird dann ein höherer Wert zur Steuerung des Zapfantriebs genutzt.

In einer Ausführungsform des Verfahrens kann es vorgesehen sein, dass die Mindestanforderung eine getriebeabhängige Mindestdrehzahl aufweist. Dadurch kann beispielsweise berücksichtigt werden, dass für die Betätigung von Kupplungen des Getriebes ein ausreichender hydraulischer Druck erforderlich ist. Dafür muss der Zapfantrieb mit einer Mindestdrehzahl rotieren, damit die Pumpe schnell genug angetrieben wird. Es können Anforderungen des Fahrgetriebes und alternativ oder zusätzlich des Zapfgetriebes berücksichtigt werden. Die getriebeabhängige Mindestdrehzahl kann in Abhängigkeit von einer Fahrzeuggeschwindigkeit, einem Pumpenschwenkwinkel und alternativ oder zusätzlich einer Öltemperatur bestimmt werden. Es kann sich alternativ auch um eine fest vorgegebene Drehzahl handeln, wie 800 Umdrehungen pro Minute.

Alternativ oder zusätzlich kann die Mindestanforderung einen schaltungsabhängigen Anteil aufweisen. Der schaltungsabhängige Anteil kann beispielsweise nur während eines Schaltvorgangs relevant sein. Die Mindestanforderung kann also nur in Abhängigkeit von einem bestimmten Fahrzeugzustand, wie einem derzeit stattfindenden Schaltvorgang, berücksichtigt werden. Beispielsweise können bestimmte Fahrsituationen auch ein hohes Drehmoment in einen Zapfantrieb induzieren. Es können Anforderungen für das Schalten des Fahrgetriebes und alternativ oder zusätzlich des Zapfgetriebes berücksichtigt werden.

Alternativ oder zusätzlich kann die Mindestanforderung einen abtriebsabhängigen Anteil aufweisen. Abtriebsabhängig kann hier abtriebsmomentabhängig sein. Beispielsweise kann bei Überschreiten eines Schwellwerts eines Abtriebsmoments der Zapfantrieb so gesteuert werden, dass die Zapfdrehzahl erhöht wird. Dadurch können beispielsweise ausreichende Leistungsreserven sichergestellt werden. Das Abtriebsmoment kann ein Abtriebsmoment an der Zapfwelle oder an einer Abtriebswelle des Fahrantriebs sein.

Sofern die Mindestanforderung mehrere Anteile aufweist, kann für die Bestimmung der Steuerung jeweils der Anteil mit dem größten Wert berücksichtigt werden. Sofern auch unterschiedliche Sollantriebssteuerungswerte zu berücksichtigen sind kann jeweils der insgesamt höchste Wert für die Steuerung berücksichtigt werden. Sowohl die Sollantriebssteuerungswerte als auch die Mindestanforderungsanteile können modular erweitert werden, beispielsweise in dem Fahrzeugsteuergerät und alternativ oder zusätzlich dem Getriebesteuergerät. Beispielsweise kann eine Mindestzapfantriebsdrehzahl für Schaltvorgänge hinterlegt werden. Beispielsweise können Maximalwerte für den Schutz unterschiedlicher Bauteile hinterlegt werden.

In einer Ausführungsform des Verfahrens kann es vorgesehen sein, dass die Sollantriebssteuerung eine Sollabtriebsdrehzahl des Zapfantriebs aufweist. Beispielsweise kann also durch das Fahrzeugsteuergerät vorgegeben werden, welche absolute Drehzahl durch den Zapfantrieb an der Zapfwelle bereitgestellt werden soll.

Alternativ oder zusätzlich kann es vorgesehen sein, dass die Sollantriebssteuerung einen Sollgradienten der Sollabtriebsdrehzahl des Zapfantriebs aufweist. Beispielsweise kann also durch das Fahrzeugsteuergerät vorgegeben werden, wie sich die Drehzahl am Zapfantrieb verändern soll. Damit kann beispielsweise eine Sollverzögerung oder Sollbeschleunigung vorgegeben werden.

Alternativ oder zusätzlich kann es vorgesehen sein, dass die Sollantriebssteuerung ein maximales Sollabtriebsmoment aufweist. Das Fahrzeugsteuergerät kann also vorgeben, welches maximale Sollabtriebsmoment durch den Zapfantrieb bereitstellbar sein soll. So kann an dem Fahrzeugsteuergerät beispielsweise eine Herabsetzung von Betriebswerten erfolgen.

In einer Ausführungsform des Verfahrens kann es vorgesehen sein, dass das Verfahren ferner einen Schritt eines zusätzlichen Übermittelns der für den Zapfantrieb bestimmten Steuerung an das Fahrzeugsteuergerät aufweist. Das Getriebesteuergerät kann dazu ausgebildet sein, die für den Zapfantrieb bestimmte Steuerung zusätzlich an das Fahrzeugsteuergerät zu übermitteln. Dadurch kann durch das Fahrzeugsteuergerät beispielsweise erkannt werden, ob die Sollanforderungen umgesetzt werden können. Dann kann eine Rückmeldung an den Fahrzeugführer oder ein autonomes Steuersystem erfolgen. Zudem kann so dann eine Anpassung von Sollanforderungen durch das Fahrzeugsteuergerät erfolgen. Beispielsweise kann eine tatsächlich vorgegebene Abtriebsdrehzahl des Zapfantriebs, mit welcher der Elektromotor gesteuert wird, von dem Getriebesteuergerät auch an das Fahrzeugsteuergerät ausgegeben werden.

Ein zweiter Aspekt betrifft ein Getriebesteuergerät für einen elektrisch angetriebenen Zapfantrieb eines Antriebsstrangs eines Kraftfahrzeugs. Das Getriebesteuergerät ist dazu ausgebildet, in Abhängigkeit von einer durch ein Fahrzeugsteuergerät bestimmten Sollantriebssteuerung und von einer durch das Fahrzeugsteuergerät bestimmten Steuerklasse eine Steuerung des Zapfantriebs zu bestimmen. Das Getriebesteuergerät kann den Zapfantrieb mit der so bestimmten Steuerung steuern, beispielsweise durch die Ausgabe von Steuersignalen an einen Zapfantrieb, beispielsweise an einen Inverter eines Elektromotors des Zapfantriebs. Das Getriebesteuergerät ist dazu ausgebildet, das Verfahren gemäß dem ersten Aspekt durchzuführen. Jeweilige Vorteile und weitere Merkmale sind der Beschreibung des ersten Aspekts zu entnehmen, wobei Ausgestaltungen des ersten Aspekts auch Ausgestaltungen des zweiten Aspekts und umgekehrt bilden.

Ein dritter Aspekt betrifft ein Getriebesystem mit einem Getriebe und mit einem Getriebesteuergerät gemäß dem zweiten Aspekt. Das Getriebe kann beispielsweise als Schaltgetriebe oder stufenloses Getriebe ausgebildet sein. Das Getriebe kann dazu ausgebildet sein, ein von dem Elektromotor des Zapfantriebs erzeugtes Drehmoment an eine Zapfwelle zu übertragen. Das Getriebe kann alternativ oder zusätzlich dazu ausgebildet sein, ein von dem Antriebsmotor erzeugtes Drehmoment an eine Abtriebswelle zu übertragen. Das Getriebe kann als Fahrgetriebe und alternativ oder zusätzlich als Zapfgetriebe ausgebildet sein. Jeweilige Vorteile und weitere Merkmale sind der Beschreibung des zweiten Aspekts zu entnehmen, wobei Ausgestaltungen des zweiten Aspekts auch Ausgestaltungen des dritten Aspekts und umgekehrt bilden.

Ein vierter Aspekt betrifft ein Steuersystem zum Steuern eines elektrisch angetriebenen Zapfantriebs eines Antriebsstrangs eines Kraftfahrzeugs. Das Steuersystem weist ein Fahrzeugsteuergerät und ein Getriebesteuergerät auf. Das Fahrzeugsteuergerät ist dazu ausgebildet, in Abhängigkeit von einer erfassten Fahrzeugsteuerung eine Sollantriebssteuerung zu bestimmen und an das Getriebesteuergerät zu übermitteln. Zudem ist das Fahrzeugsteuergerät dazu ausgebildet, eine Steuerklasse zu bestimmen, beispielsweise in Abhängigkeit von der erfassten Fahrzeugsteuerung, und an das Getriebesteuergerät zu übermitteln.

Das Getriebesteuergerät ist dazu ausgebildet, in Abhängigkeit von der Sollantriebssteuerung und der Steuerklasse eine Steuerung des Zapfantriebs zu bestimmen. Das Getriebesteuergerät kann dazu ausgebildet sein, die Sollantriebssteuerung und die Steuerklasse von dem Fahrzeugsteuergerät zu empfangen, beispielsweise mittels eines CAN-Bus oder per Funk. Das Steuersystem kann dazu ausgebildet sein, das Verfahren gemäß dem ersten Aspekt durchzuführen. Das Steuersystem weist das Getriebesteuergerät gemäß dem zweiten Aspekt auf. Jeweilige Vorteile und weitere Merkmale sind der Beschreibung des ersten bzw. zweiten Aspekts zu entnehmen, wobei Ausgestaltungen des ersten und des zweiten Aspekts auch Ausgestaltungen des vierten Aspekts und umgekehrt bilden. Das Steuersystem kann dazu ausgebildet sein, den Zapfantrieb zu steuern.

Ein fünfter Aspekt betrifft ein Kraftfahrzeug. Das Kraftfahrzeug weist einen Antriebsstrang mit einem elektrisch angetriebenen Zapfantrieb auf. Der Antriebsstrang kann wie oben beschrieben ausgebildet sein, beispielsweise als elektrischer Antriebsstrang. Das Kraftfahrzeug weist zudem ein Steuersystem gemäß dem vierten Aspekt auf. Das Kraftfahrzeug kann alternativ oder zusätzlich das Getriebesteuergerät gemäß dem zweiten Aspekt aufweisen. Das Kraftfahrzeug kann alternativ oder zusätzlich das Getriebesystem gemäß dem dritten Aspekt aufweisen. Der Zapfantrieb und insgesamt der Antriebsstrang kann mit dem Verfahren gemäß dem ersten Aspekt gesteuert werden. Jeweilige Vorteile und weitere Merkmale sind der Beschreibung der anderen Aspekte zu entnehmen, wobei Ausgestaltungen der anderen Aspekte auch Ausgestaltungen des fünften Aspekts und umgekehrt bilden.

Das Kraftfahrzeug kann ein oder mehrere Bedienelemente aufweisen. Das Kraftfahrzeug kann eine autonome Fahrsteuerung aufweisen.

### Kurze Beschreibung der Figuren

Fig. 1 veranschaulicht schematisch ein Verfahren zum Steuern eines Antriebsstrangs eines Kraftfahrzeugs.
Fig. 2 veranschaulicht schematisch ein Kraftfahrzeug.

### Detaillierte Beschreibung von Ausführungsformen

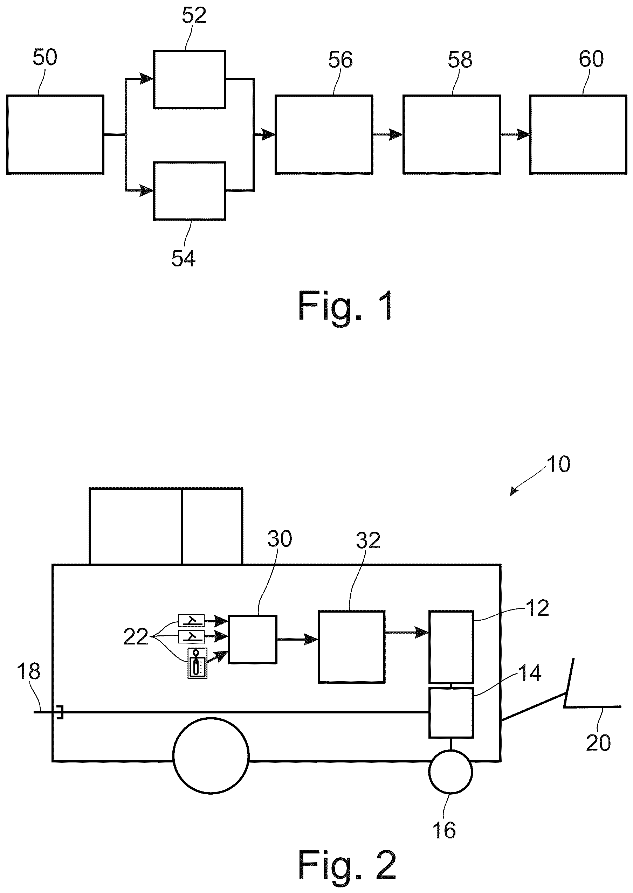

Fig. 1 veranschaulicht schematisch ein Verfahren zum Steuern eines Zapfantriebs 18 eines Antriebsstrangs eines Kraftfahrzeugs 10, welches in Fig. 2 dargestellt ist. Das Kraftfahrzeug 10 ist hier als Arbeitsmaschine in Form eines Radladers ausgebildet. Der Antriebsstrang weist einen als Elektromotor 12 ausgebildeten Motor mit Inverter auf. Zudem weist der Antriebsstrang ein Getriebe 14 auf, welches eine Antriebskraft von dem Elektromotor 12 an angetriebene Räder 16 überträgt und als Schaltgetriebe ausgebildet ist. Weiterhin ist in der dargestellten Ausführungsform ein Zapfantrieb 18 des Antriebsstrangs gezeigt, welcher ebenfalls über das Getriebe 14 von dem Elektromotor 12 angetrieben werden kann und eine Zapfwelle aufweist, welche rückseitig von dem Kraftfahrzeug 10 vorsteht. Der Elektromotor 12 bildet einen Teil des Zapfantriebs 18. In einer anderen Ausführungsform weist der Zapfantrieb 18 einen dedizierten Elektromotor auf und die Räder 16 werden über einen Antriebsmotor unabhängig davon angetrieben.

Zudem weist das Kraftfahrzeug 10 ein Anbaugerät als Werkzeug auf, welches hier als hydraulisch betätigbare Schaufel 20 ausgebildet ist. Dazu treibt der Elektromotor 12 des Zapfantriebs 18 mindestens eine nicht dargestellte Pumpe an, welche einen hydraulischen Druck bereitstellt. Die Pumpe ist als variable Pumpe oder Pumpe mit festem Schluckvolumen ausgebildet. Das Kraftfahrzeug 10 weist mehrere Bedienelemente 22 auf, mittels welchen Steuereingaben durch einen Bediener gemacht werden können. Vorliegend ist hier ein Fahrpedal, Bremspedal und Fahrbereichswählhebel dargestellt. Das Verfahren zum Steuern des Antriebsstrangs wird auf einem Steuersystem ausgeführt, welches ein Fahrzeugsteuergerät 30 und ein Getriebesteuergerät 32 aufweist. Das Getriebesteuergerät 32 wird in dem gezeigten Beispiel durch den Hersteller des Antriebsstrangs oder einen Zulieferer des Getriebesteuergeräts 32 konfiguriert und das Fahrzeugsteuergerät 30 durch den Fahrzeughersteller.

In einem Schritt 50 wird eine Fahrzeugsteuerung an den Bedienelementen 22 erfasst und entsprechende Bediensignale an das Fahrzeugsteuergerät 30 übertragen. In einem Schritt 52 erfolgt ein Bestimmen der Sollantriebssteuerung in Abhängigkeit von der erfassten Fahrzeugsteuerung durch das Fahrzeugsteuergerät 30. Vorliegend weist die Sollantriebssteuerung jeweils eine Solldrehzahl des Elektromotors 12 des Zapfantriebs 18 und einen Sollgradienten der Solldrehzahl des Elektromotors 12 des Zapfantriebs 18 auf. In einem Schritt 54 erfolgt ein Bestimmen einer Steuerklasse durch das Fahrzeugsteuergerät 30. In einer Ausführungsform erfolgt die Bestimmung 54 der Steuerklasse in Abhängigkeit von der erfassten Fahrzeugsteuerung und in einer anderen Ausführungsform alternativ oder zusätzlich in Abhängigkeit von weiteren Kenngrößen.

In einem Schritt 56 erfolgt ein Übermitteln der bestimmten Sollantriebssteuerung und der bestimmten Steuerklasse an das Getriebesteuergerät 32 und entsprechend ein Empfangen der bestimmten Sollantriebssteuerung an dem Getriebesteuergerät 32. In einem Schritt 58 erfolgt ein Bestimmen einer Steuerung des Zapfantriebs 18 in Abhängigkeit von der Sollantriebssteuerung und in Abhängigkeit von der Steuerklasse durch das Getriebesteuergerät 32. Die Steuerklasse modifiziert dabei eine Steuerkennlinie oder eine Kennlinienschar, welche einen Zusammenhang zwischen der Sollantriebssteuerung und der Steuerung des Zapfantriebs 18 vorgibt. In einem Schritt 60 erfolgt anschließend ein Steuern des Zapfantriebs 18 durch das Getriebesteuergerät 32, wozu entsprechende Steuersignale an den Elektromotor 12 und in einer Ausführungsform zusätzlich oder alternativ an das Getriebe 14 übermittelt werden.

Für die Sollantriebssteuerung werden in einer Ausführungsform von dem Fahrzeugsteuergerät 30 mehrere konkurrierende Sollantriebssteuerungswerte bestimmt, wie mehrere Solldrehzahlen für den Elektromotor 12. Für die Steuerung wird dann der Größte dieser Sollantriebssteuerungswerte durch das Fahrzeugsteuergerät 30 oder das Getriebesteuergerät 32 ausgewählt, um eine ausreichende Drehzahl des Elektromotors 12 sicherzustellen. Zudem werden von dem Getriebesteuergerät 32 Mindestanforderungen an dem Zapfantrieb 18 berücksichtigt, wie eine Mindestdrehzahl für den Elektromotor 12 zur ausreichenden Druckversorgung von Kupplungen und einer Lenkhydraulik. Auch dabei werden mehrere konkurrierende Mindestanforderungswerte bestimmt, wie mehrere Mindestdrehzahlen. Für die Steuerung wird dann der Größte dieser Mindestanforderungswerte durch das Getriebesteuergerät 32 ausgewählt, um eine ausreichende Drehzahl des Elektromotors 12 sicherzustellen.

Sofern die Sollantriebssteuerung in Verbindung mit der Steuerklasse eine geringere als die Größte der Mindestanforderungswerte erfordert, erfolgt die Steuerung durch das Getriebesteuergerät 32 anhand des Größten der Mindestanforderungswerte. In analoger Weise werden in einer Ausführungsform auch Maximalwerte berücksichtigt. Dadurch können eine Betriebssicherheit und ein Bauteilschutz in dem Getriebesteuergerät 32 implementiert werden, die damit bei der Gestaltung des Fahrzeugsteuergeräts 30 und der Bestimmung 52 der Sollantriebssteuerung nicht vollständig berücksichtigt werden müssen.

### Bezugszeichen

- 10: Kraftfahrzeug
- 12: Elektromotor
- 14: Getriebe
- 16: Räder
- 18: Zapfantrieb
- 20: Schaufel
- 22: Bedienelemente
- 30: Fahrzeugsteuergerät
- 32: Getriebesteuergerät
- 50: Erfassen einer Fahrzeugsteuerung
- 52: Bestimmen der Sollantriebssteuerung in Abhängigkeit der erfassten Fahrzeugsteuerung
- 54: Bestimmen einer Steuerklasse
- 56: Übermitteln und Empfang der bestimmten Sollantriebssteuerung
- 58: Bestimmen einer Steuerung des Zapfantriebs
- 60: Steuern des Zapfantriebs

## Patentansprüche

1. Verfahren zum Steuern (60) eines angetriebenen Zapfantriebs (18) eines Antriebsstrangs eines Kraftfahrzeugs (10), wobei das Verfahren wenigstens die folgenden Schritte aufweist:
- Empfangen (56) einer durch ein Fahrzeugsteuergerät (30) bestimmten Sollantriebssteuerung und einer durch das Fahrzeugsteuergerät (30) bestimmten Steuerklasse an einem Getriebesteuergerät (32);
- Bestimmen (58) einer Steuerung des Zapfantriebs (18) in Abhängigkeit von der empfangenen Sollantriebssteuerung und von der empfangenen Steuerklasse durch das Getriebesteuergerät (32).

2. Verfahren nach Anspruch 1, **dadurch gekennzeichnet, dass** das Verfahren ferner die folgenden Schritte aufweist:
- Erfassen (50) einer Fahrzeugsteuerung; und
- Bestimmen (52) der Sollantriebssteuerung in Abhängigkeit von der erfassten Fahrzeugsteuerung durch das Fahrzeugsteuergerät (30).

3. Verfahren nach Anspruch 1 oder 2, **dadurch gekennzeichnet, dass** das Verfahren ferner den folgenden Schritt aufweist:
- Bestimmen (54) der Steuerklasse durch das Fahrzeugsteuergerät (30).

4. Verfahren nach einem der vorhergehenden Ansprüche, **dadurch gekennzeichnet, dass** die Steuerklasse wenigstens eine der folgenden Steuerverhalten bei der Bestimmung der Steuerung des Zapfantriebs (18) in Abhängigkeit von der Sollantriebssteuerung verändert:
- ein Verhalten bei einer steigenden Anforderung an den Antriebsstrang;
- ein Verhalten bei einer fallenden Anforderung an den Antriebsstrang;
- eine in Abhängigkeit von der Sollantriebssteuerung bestimmte Abtriebsdrehzahl; und
- eine Verschiebung einer Priorität einer Leistungsaufteilung zwischen dem elektrischen Zapfantrieb (18) und einem Fahrantrieb des Antriebsstrangs.

5. Verfahren nach einem der vorhergehenden Ansprüche, **dadurch gekennzeichnet, dass** die erfasste Fahrzeugsteuerung eine erste Steuergröße und eine zweite Steuergröße aufweist und das Fahrzeugsteuergerät (30) dazu ausgebildet ist, in Abhängigkeit von der ersten Steuergröße einen ersten Sollantriebssteuerungswert und in Abhängigkeit von der zweiten Steuergröße einen zweiten Sollantriebssteuerungswert zu bestimmen, wobei für das Steuern (60) des elektrischen angetriebenen Zapfantriebs (18) ein Größerer der beiden Sollantriebssteuerungswerte genutzt wird.

6. Verfahren nach einem der vorhergehenden Ansprüche, **dadurch gekennzeichnet, dass** bei der Bestimmung (58) der Steuerung des Zapfantriebs (18) eine Mindestanforderung durch das Getriebesteuergerät (32) berücksichtigt wird.

7. Verfahren nach Anspruch 6, **dadurch gekennzeichnet, dass** die Mindestanforderung wenigstens einen der folgenden Anteile aufweist:
- eine getriebeabhängige Mindestdrehzahl;
- einen schaltungsabhängigen Anteil; und
- einen abtriebsabhängigen Anteil.

8. Getriebesteuergerät (32) für einen elektrisch angetriebenen Zapfantrieb (18) eines Antriebsstrangs eines Kraftfahrzeugs (10), wobei das Getriebesteuergerät (32) dazu ausgebildet ist, ein Verfahren nach einem der vorhergehenden Ansprüche auszuführen.

9. Getriebesystem mit einem Getriebe (14), das ein Getriebesteuergerät (32) nach Anspruch 8 aufweist.

10. Steuersystem zum Steuern (60) eines elektrisch angetriebenen Zapfantriebs (18) eines Antriebsstrangs eines Kraftfahrzeugs (10), wobei das Steuersystem ein Fahrzeugsteuergerät (30) und ein Getriebesteuergerät (32) nach Anspruch 8 aufweist, wobei das Fahrzeugsteuergerät (30) dazu ausgebildet ist, in Abhängigkeit von einer erfassten Fahrzeugsteuerung eine Sollantriebssteuerung zu bestimmen (52), wobei das Fahrzeugsteuergerät (30) dazu ausgebildet ist, eine Steuerklasse zu bestimmen (54), und wobei das Fahrzeugsteuergerät (30) dazu ausgebildet ist, die Sollantriebssteuerung und die Steuerklasse an das Getriebesteuergerät (32) zu übermitteln (56).

11. Kraftfahrzeug (10) mit einem Antriebsstrang und einem Steuersystem nach Anspruch 10.
